# FASCICULE DE BREVET EUROPEEN

(11) **EP 3 337 964 B1**
(45) Date de publication et mention de la délivrance du brevet: **04.03.2020**
(21) Numéro de dépôt: 16770043.4
(22) Date de dépôt: 19.08.2016
(51) Int. Cl.: F01P 11/20, B60H 1/00, F01M 5/02

(54) **DISPOSITIF THERMIQUE POUR UN FLUIDE, AVEC CHICANES, ET CIRCUITS ASSOCIES**
THERMISCHE VORRICHTUNG FÜR EIN FLUID MIT ABLENKBLECHEN SOWIE ZUGEHÖRIGE KREISE
THERMAL DEVICE FOR A FLUID, WITH BAFFLES, AND ASSOCIATED CIRCUITS

(30) Priorité: 20.08.2015 FR 1557837
(43) Date de publication de la demande: 27.06.2018
(73) Titulaire: Hutchinson, 75008 Paris (FR)
(72) Inventeur: CHOPARD, Fabrice, 75008 Paris (FR); BLINE, Paul, 75008 Paris (FR); CHAUVET, Boris, 75008 Paris (FR); DOMINIAK, Christophe, 75008 Paris (FR)
(74) Mandataire: Pichat, Thierry
(86) Numéro de dépôt international: PCT/FR2016/052094
(87) Numéro de publication internationale: WO 2017/029458

(56) Documents cités:
- EP-A2- 2 492 119
- WO-A1-2013/071976
- DE-A1-102008 013 655
- JP-U- H0 459 313
- US-A1- 2005 167 169

## Description

La présente invention concerne notamment un dispositif thermique pour un fluide frigorigène ou caloporteur.

Un tel dispositif existe déjà. EP 0076884 ou US 2005/167169 en présente un, qui comprend, comme celui de la présente demande :
- un circuit où un fluide circule dans le temps à différente températures,
- un stockeur-échangeur de chaleur disposé sur ledit circuit et renfermant un volume intérieur où circule le fluide, entre une entrée et une sortie, et où sont disposés des éléments de stockage et de restitution d'une énergie thermique, à matériau MCP (matériau à changement de phase), en contact avec le fluide qui circule, pour échanger thermiquement entre eux,

Il est précisé qu'un matériau à changement de phase - ou MCP-désignera tout matériau capable de changer d'état physique dans une plage de température restreinte. Le stockage thermique peut s'opérer par utilisation de sa Chaleur Latente (CL) : le matériau peut alors stocker ou céder de l'énergie par simple changement d'état, tout en conservant une température sensiblement constante, celle du changement d'état.

Or, l'industrie est invitée à accélérer la mise sur le marché de nouvelles technologies pouvant réduire les émissions de polluants, lisser d'éventuelles augmentations ponctuelles de charges par rapport à un fonctionnement nominal dimensionnant, mais aussi proposer des solutions pour décaler dans le temps la restitution d'une énergie disponible à un autre moment.

Or, les matériaux MCP dans leur mise en œuvre actuelle, en particulier dans la manière de réaliser l'environnement structurel où ils sont disposés, ne semblent pas pouvoir répondre aux attentes du marché.

Une efficacité du rendement thermique dans l'échange au sein du stockeur-échangeur et donc une mise en œuvre industrielle propre à permettre d'adapter le stockeur-échangeur au besoin du client (rendement de l'échange/capacité en volume/encombrement) sont attendues.

C'est donc dans ce contexte qu'il est ici proposé que le dispositif thermique présenté ci-avant soit tel que :
- de construction modulaire, le stockeur-échangeur comprenne plusieurs modules adjacents, distincts structurellement et dont certains au moins comprennent individuellement un fond séparant deux modules adjacents, chaque fond :
   -- scindant le volume en une succession de sous-volumes où sont répartis les éléments de stockage et de restitution autour et/ou dans lesquels circule le fluide, en échanges thermiques avec eux,
   -- et présentant au moins un passage de communication entre les sous-volumes,
- et, pour créer dans le stockeur-échangeur des chicanes sur le chemin du fluide :
   -- les passages de communication entre les sous-volumes sont décalés d'un passage au suivant, et/ou
   -- à l'intérieur du module considéré, et pour y créer d'autres dits sous-volumes, des cloisons se dressent qui maintiennent des communications entre lesdits autres sous-volumes, pour la circulation du fluide.

Le terme « chicanes » est à comprendre comme indiquant la présence dans le stockeur-échangeur de moyens qui contrarient le cheminement naturel du fluide dans ledit volume intérieur en assurant une certaine turbulence à ce fluide alors en échange thermique avec lesdits éléments de stockage et de restitution d'énergie. Ces chicanes pourront en particulier imposer au fluide, dans le stockeur-échangeur, un chemin de circulation qui serpentera, tel un parcours en zigzag.

En liaison avec ce qui précède, il est aussi proposé que les éléments de stockage et de restitution d'une énergie thermique soient des structures individualisées ayant des surfaces extérieures formées pour réserver entre elles un espace où le fluide peut circuler.

Là encore, la mise en en œuvre de ces éléments en sera facilité (manutention/stockage/fabrication/maintenance/adaptation aux besoins), de même que le rendement des échanges thermiques.

Le contrôle des échanges thermiques entre le/chaque volume intérieur du stockeur-échangeur et l'extérieur du dispositif a également été pris en compte.

Afin là encore de pouvoir maîtriser la performance attendue des échanges thermiques internes au dispositif, en particulier au sein du/de chaque volume intérieur, il est conseillé :
- que le stockeur-échangeur présente au moins une paroi périphérique interposée entre le (chaque) volume intérieur de l'extérieur, et
- que le dispositif comprenne en outre au moins une première couche contenant un matériau MCP et une seconde couche contenant un matériau isolant thermique qui entoureront ledit volume intérieur, afin d'en assurer la gestion thermique.

Le matériau thermiquement isolant de la seconde couche ne sera donc pas un matériau MCP, mais un isolant tel qu'une laine de verre, un isolant poreux, une mousse de polyuréthane ou de polyisocyanurate, ou encore plus favorablement un matériau thermiquement isolant poreux disposé dans une enceinte sous vide, pour définir au moins un panneau isolant sous vide, PIV.

Aussi est-il proposé que le matériau isolant thermique soit poreux et qu'au moins la seconde couche contenant ce matériau isolant thermique soit contenue dans une enveloppe étanche audit matériau et à l'air pour que, un vide d'air étant établi dans ladite, un panneau PIV soit constitué

Le matériau thermiquement isolant de la seconde couche présentera une conductivité thermique plus faible que le matériau MCP.

Avec un PIV (panneau isolant sous vide ; VIP en anglais), la performance de la gestion thermique sera optimisée, voire le poids d'ensemble diminué par rapport à un autre isolant.

Par « PIV », on entend une structure sous vide d'air partiel (pression interne comprise entre 10 et 10⁴ Pa) contenant au moins un matériau isolant thermique a priori poreux.

« Poreux » désignera ici un matériau possédant des interstices permettant le passage de l'air. Les matériaux poreux, à cellules ouvertes, incluent donc les mousses mais également les matériaux fibreux (tels que la laine de verre ou de roche). Les interstices de passage que l'on peut qualifier de pores ont des tailles inférieures à 1 ou 2mm, et de préférence à 1micron, et préférentiellement encore à 10⁻⁹m (structure nano-poreuse), pour des questions en particulier de tenue au vieillissement et donc de possible dépression moins forte dans l'enveloppe PIV.

De fait, les panneaux PIV utilisés seront préférentiellement des isolants thermiques où des noyaux en matériau poreux, par exemple en gel de silice ou poudre d'acide silicique (Si02), pourront avoir été pressés en plaque et entourés chacun, sous vide d'air, d'une feuille enveloppante étanche aux gaz, par exemple en matière plastique et/ou ou aluminium laminé. Le vide obtenu, d'une pression résiduelle qui pourra être inférieure à 1 mbar, permettra d'abaisser favorablement la conductivité thermique à moins de 0,015/0,020 W/(m·K) environ dans les conditions d'utilisation.

Or, dans au moins certaines applications ou situations de fonctionnement à anticiper, il pourra être nécessaire d'atteindre une efficacité d'isolation thermique via ladite « seconde couche » en particulier notablement supérieure à celle des matériaux isolants plus classiques, tels ceux précités. Typiquement, une conductivité thermique À inférieure à 0.008/0,01 W/m.K pourra être attendue.

Concernant ces panneaux PIV, il a en outre été noté qu'ils ne semblent pas non plus répondre jusqu'à présent aux attentes du marché. Notamment, leurs mises en œuvre sur le terrain est un problème, en particulier leur conditionnement.

Aussi est-il proposé:
- que ladite au moins une paroi périphérique séparant de l'extérieur le (chaque dit) volume intérieur du dispositif contienne un matériau polymère moulable,
- et que les première et seconde couches soient intégrées avec ledit matériau polymère (c'est-à-dire disposés dans ladite paroi périphérique).

Noyer de moulage les première et seconde couches dans le matériau polymère devrait être considéré comme une solution favorable.

Au sujet de cette gestion thermique autour du(des) volume(s) interne(s) où s'effectuent le stockage et les échanges de chaleur entre lesdits éléments logés là et le fluide circulant le long d'eux, il est proposé, pour les raisons ci-avant évoquées:
- que ladite paroi périphérique appartienne à un boîtier protecteur extérieur entourant tous les modules du stockeur-échangeur et qui intègrera ou sera doublé par lesdites première(s) et/ou seconde(s) couche(s) précitées,
- et/ou que chacun desdits modules comprenne une dite paroi périphérique qui donc intégrera ou sera doublée par lesdites première(s) et/ou seconde(s) couche(s).

La première option permettra d'individualiser la gestion thermique du stockeur-échangeur et d'adapter plus facilement la solution de base ici présentée dans l'environnement industriel actuel des clients, avec leurs contraintes immédiates d'encombrement, de réalisation des structures environnant ou complétant le présent dispositif.

La seconde facilitera la modularité et une réalisation industrielle en très série du stockeur-échangeur et donc l'évolution à plus long terme de la solution ici évoquée.

Outre le dispositif qui vient d'être présenté, sont ici en particulier concernées (bien que non exclusivement) deux applications industrielles :
Dans la première, le circuit précité est un circuit de refroidissement par un liquide caloporteur, tel que de l'eau, d'un moteur sur un véhicule, le circuit comprenant un chemin de circulation du liquide et, disposés sur le chemin :
- en série, un moyen de mise en circulation du liquide, un moteur dont des organes sont à placer en échange thermique avec le liquide et un radiateur présentant une entrée et une sortie pour ledit liquide afin de le placer en échange thermique avec un autre fluide,
- montée sur une première branche, entre l'entrée et la sortie du radiateur, le stockeur-échangeur de chaleur évoqué ci-avant, avec tout ou partie d ses caractéristiques.

Dans ce cas, il pourra être utile, dans une version évoluée que, dans le boîtier protecteur, une colonne de raccordement pour le fluide, s'étende à l'extérieur des modules et soit équipée de vannes.

Ainsi, on associera modularité, efficacité de rendement et réalisation industrielle en très série du stockeur-échangeur, avec La première option et donc l'évolution à plus long terme de ladite seconde solution ici évoquée.

Dans la seconde application, il est proposé, pour satisfaire aux problématiques ci-avant, un dispositif thermique pour donc un fluide frigorigène ou caloporteur, le dispositif comprenant un circuit de circulation où un fluide circule dans le temps à différentes températures, et qui, sur un moteur de véhicule, est un circuit de lubrification sur lequel sont disposés, en communication fluide, des organes fonctionnels du moteur à lubrifier, un carter de lubrifiant et un stockeur-échangeur de chaleur, lequel inclut :
- un volume intérieur où circule le lubrifiant, entre une entrée et une sortie), et où sont disposés des éléments de stockage et de restitution d'une énergie thermique, à matériau MCP,
- et, dans ledit volume intérieur, des cloisons qui scindent le volume en une succession de sous-volumes avec des communications entre eux, pour la circulation en chicanes du lubrifiant, autour et/ou dans les éléments de stockage et de restitution d'énergie thermique qui sont répartis dans les sous-volumes, pour échanger thermiquement avec le lubrifiant.

Favorablement :
- certains au moins des organes fonctionnels dudit moteur seront situés dans un bloc moteur,
- le carter de lubrifiant sera vissé au bloc moteur, sous lui, et contiendra du lubrifiant, et
- le stockeur-échangeur de chaleur sera disposé dans le carter de lubrifiant, pour envoyer vers le bloc moteur du lubrifiant après qu'il ait circulé dans ledit stockeur-échangeur de chaleur.

Ainsi, on créera une structure unique à rapporter directement sous le bloc moteur.

Mais, comme expliqué plus loin, il peut y avoir des problèmes d'encombrement ou de volume imposé par un constructeur.

C'est pourquoi, il pourra avantageusement être prévu :
- que, dans le carter de lubrifiant, circulation de lubrifiant à l'arrêt, lesdits éléments de stockage et de restitution de ladite énergie thermique baignent dans un premier volume de lubrifiant (V1) à l'extérieur duquel s'étendra un second volume de lubrifiant (V2) supérieur au premier volume (V1),
- voire qu'au moins la seconde couche contenant le matériau isolant thermique, alors poreux, soit contenue dans une enveloppe étanche audit matériau et à l'air pour que, un vide d'air étant établi dans ladite enveloppe, un panneau PIV soit constitué.

Un tel rapport de volume V2/V1, typiquement compris entre 1.1 et 1.5, associé au chicanage et à la gestion thermique périphérique prévus permettra d'atteindre l'objectif par exemple lors d'un redémarrage moteur d'une voiture, de réchauffer en quelque mns le lubrifiant moteur à une température supérieure à 15°C alors que la température extérieure est très froide, par exemple -5 à -10°C, et que le véhicule est à l'arrêt à cette température depuis par exemple 6 à 8 heures, voire 10-12.

Si nécessaire, les différents aspects de l'invention seront encore mieux compris et d'autres caractéristiques, détails et avantages de celle-ci apparaîtront encore à la lecture de la description qui suit, faite à titre d'exemple non limitatif et en référence aux dessins annexés, dans lesquels :
- les figures 1-4 schématisent l'application à un stockeur/échangeur, (figure 1) avec des détails concernant le(s) corps qui le compose(nt) en figures 2-4;
- les figures 5-6 sont des coupes transversales schématisant différentes manières de réaliser la barrière MCP/PIV, repérée 15/23 ci-après, au sein d'au moins une enveloppe étanche ;
- les figures 7-9 d'une part et 10-17 d'autre part montrent deux exemples d'application : deux schémas de circuits de circulation d'un lubrifiant (figures 7,8), avec un carter d'huile intégrant un stockeur/échangeur figure 9, et deux montages possibles d'un circuit de refroidissement, en série figures 10-12 et autre figures 13-17,
- et la figure 18 schématise une fonctionnalisation supérieure du stockeur-échangeur.

Le schéma de la figure 1 montre un dispositif thermique 1 où entre et d'où sort un fluide frigorigène ou caloporteur 9, sa circulation y étant assurée via des moyens de circulation 11, telle qu'une pompe.

Le dispositif 1 comprend :
- un circuit 300 de circulation du fluide 9 où le fluide circule dans le temps à différente températures,
- et un stockeur-échangeur 10 de chaleur disposé sur le circuit 300.

Le stockeur-échangeur (ou unité de stockage et de restitution d'énergie) 10 est une unité qui va emmagasiner de l'énergie thermique par changement(s) de phase d'au moins un matériau MCP, puis ultérieurement restituer une partie au moins de cette énergie par nouveau(x) changement(s) de phase (d'au moins certains) de ce(s) matériau(x) MCP.

Le stockeur-échangeur 10 renferme donc un volume intérieur 7 où circule le fluide 9 et où sont disposés des éléments 13 de stockage et de restitution d'une énergie thermique, à matériau MCP, en contact avec le fluide, pour des échanges thermiques.

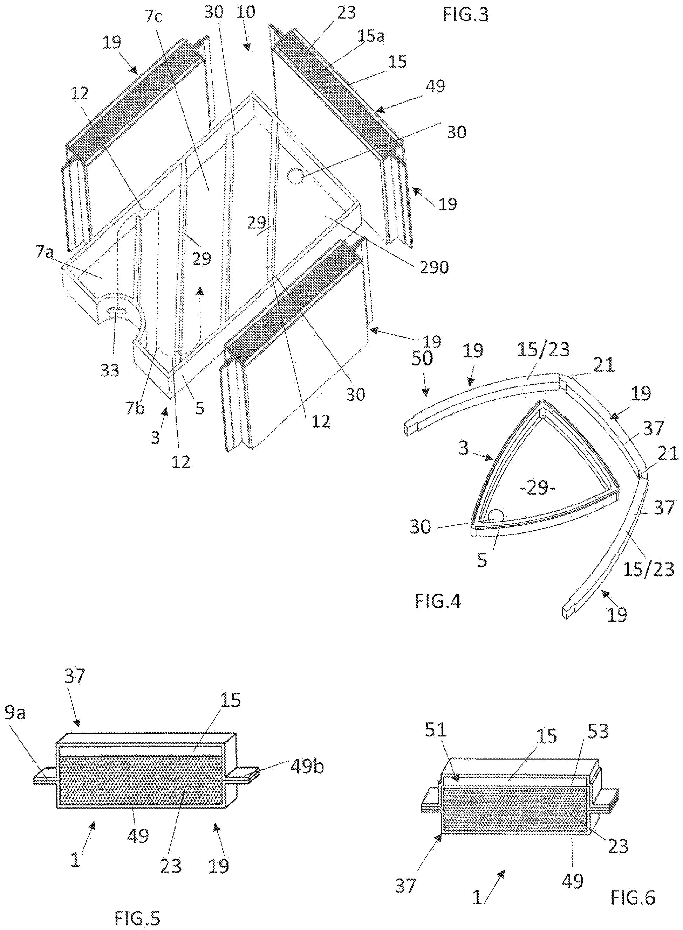

Le volume intérieur 7 du stockeur-échangeur est pourvu de chicanes. Pour les définir, le stockeur-échangeur 9 peut présenter, sur le chemin du fluide, une série de cloisons 29, comme figure 3 :
- qui scindent le volume 7 en une succession de sous-volumes, tels 7a,7b,7c...où sont disposés, par lots, des éléments 13 de stockage et de restitution d'une énergie thermique autour et/ou dans lesquels le fluide circule, en échanges thermiques avec eux,
- et qui présentent, ici chacune, au moins un passage 30' de communication entre les sous-volumes.

Le fluide 9 en circulation dans et entre les (sous-)volumes peut être liquide (eau, huile) ou gazeux (tel de l'air).

Pour la lisibilité des figures, les figures 2,3 ne montrent pas les éléments 13. On les voit figure 1.

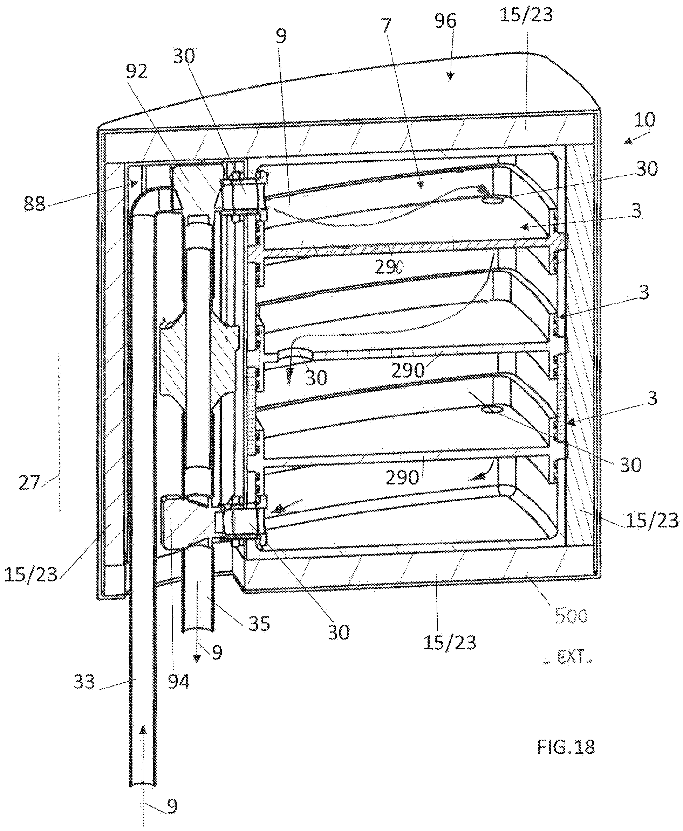

Les figures 2 et 18 permettent de comprendre que les chicanes 12 peuvent être formées uniquement par le fait que les cloisons 29 sont ici des fonds (290 figure 18) de corps ou modules 3 qui sont disposés en ligne (direction 27), les uns à la suite des autres, en communication deux à deux par un passage 30 ménagé dans chaque fond 29.

Chaque module 3 est constitué d'une paroi périphérique latérale 5 que complète le fond percé 29.

Chaque paroi transversale 29 et son passage traversant 30 forment ainsi un ralentisseur à la libre circulation du fluide entre son entrée 33 et sa sortie 35. De préférence, deux passages 30 successifs seront décalés latéralement comme schématisé. A l'opposé du fond, chaque module est ouvert, en 31, de sorte que, sortant d'un passage 30, le fluide arrive directement dans le volume interne du module adjacent. La circulation dans le stockeur-échangeur, entre les sous-volumes, peut être en série ou en parallèle.

Dans la variante de la figure 3, on a imaginé un corps 3 unique, avec par exemple une entrée latérale 33 à travers une zone de la paroi périphérique 5.

Dans chaque cas, en tant que constitution des éléments 13, on pourra prévoir une composition de caoutchouc telle que décrite dans EP2690137 ou dans EP2690141, à savoir dans le second cas une composition réticulée à base d'au moins un élastomère silicone « RTV » vulcanisé à température ambiante et comprenant au moins un matériau à changement de phase (MCP), ledit au moins un élastomère silicone présentant une viscosité mesurée à 25°C selon la norme ISO 3219 qui est inférieure ou égale à 5000 mPa.s.

Dans cette composition, la matrice élastomère sera majoritairement constituée d'un ou de plusieurs élastomères silicones « RTV ». Le matériau à changement de phase (MCP) thermique pourra être constitué de n-hexadécane, ou d'un sel de lithium, tous présentant des points de fusion inférieurs à 40° C.

En alternative, le matériau MCP des éléments 13 pourrait être à base d'acide gras, de paraffine, ou de sel eutectique ou hydraté, ou encore d'alcools gras, par exemple.

Pour notamment une facilité de mise en place et une optimisation des surfaces d'échange, les éléments 13 se présentent ici comme des structures individualisées ayant des surfaces extérieures, ici convexes, formées pour réserver entre elles un espace 130 où le fluide peut circuler (voir figure 2).

Une solution très favorable est alors que ces éléments 13 se présentent comme des billes. Des billes sphériques sont privilégiées dans l'exemple préféré illustré. Les éléments 13 pourraient présenter des passages traversants (billes percées par exemple).

A priori les structures individualisées 13, ici ces billes ou sphères, seront disposées en vrac dans les sous-volumes, tels 7a,7b....

Une barrière thermique active (15/23) assurera favorablement une isolation thermique du stockeur-échangeur 10 vis-à-vis de l'extérieur.

Cette barrière thermique active sera soit intégrée à la paroi périphérique latérale 5 (comme figure 2), ssoit disposé autour (figures 3,4), la barrière comprenant au moins une première couche 15 contenant un matériau MCP et une seconde couche 23 contenant un matériau isolant thermique.

A priori la seconde couche 23 sera, là où les deux couches existent et si seules deux telles couches existent, disposée autour de la première couche 15. Ainsi, on pourra s'arranger pour qu'une température extérieure excessivement froide ou chaude n'interfère que peu avec celle dans le(s) volume(s) 7, la première couche 15 agissant comme accumulateur /retardateur de variation de la température dans ce(s) volume(s) et au sein du fluide.

Afin d'optimiser cette démarche, il est conseillé que la barrière thermique active comprenne au moins un panneau PIV formant une poche 19 sous atmosphère contrôlée où sera disposé au moins la seconde couche 23, laquelle coexistera de préférence avec la couche à matériau MCP 15 au sein de l'enveloppe étanche 37.

La seconde couche 23 sera favorablement un matériau isolant thermique poreux vis-à-vis duquel l'enveloppe 37 présentera une étanchéité. Une fois le vide d'air établi dans l'enveloppe, un panneau PIV sera constitué.

Le matériau isolant thermique poreux 23 se composera favorablement d'un matériau à nanostructure, tel une poudre de silice ou un aérogel, confiné dans un feuille déformable ou conformable qui ne laissera passer ni les vapeurs d'eau ni les gaz. Le PIV obtenu sera vidé de son air pour obtenir par exemple une pression de quelques millibars, puis pourra être scellé. Typiquement, la conductivité thermique À d'un tel PIV sera de 0.004/0,008 W/m.K. L'utilisation de panneaux isolants sous vide devrait permettre d'atteindre une résistance thermique R = 5 m².K/W avec seulement 20 à 30 mm d'isolant.

Des exemples, pouvant ici s'appliquer, de panneau PIV et de matériau super-isolant sont fournis dans PCT/FR2014/050267 et dans WO2014060906 (matériau poreux), respectivement.

Les solutions présentées ci-avant doivent permettre, dans un volume et poids acceptables notamment par des constructeurs aéronautiques ou automobiles, un stockage rapide d'une énergie thermique disponible au bout d'environ 6-10 minutes, le maintien de cette énergie pendant 12 à 15 heures, avant sa restitution rapide, typiquement quelques minutes (en particulier moins de 2/3), par exemple à un moteur lors d'une phase de démarrage à froid.

Il est aussi conseillé qu'ainsi conçus, les stockeur-échangeurs 10 répondront favorablement à la nécessité d'introduire des paramètres dimensionnels tels que le RTD (resident time distribution / distribution de temps de séjour) dans les blocs et le NUT (Nombre d'unités de transfert/blocs) pour faciliter un changement d'échelle sans modifications des éléments thermiques et hydrodynamiques obtenus lors d'une qualification. La reproduction à l'identique d'un écoulement dans des volumes 7a,7b.... de tailles différentes étant impossible, sauf à décomposer un volume total en sous-éléments identiques, les solutions ci-avant pourront permettre d'envisager sans les effets d'échelles des cinétiques identiques de charge et de décharge des matériaux MCP.

Pour compléter leur réalisation, la figure 1 montre, en extrémités et axialement (direction 27) de part et d'autre de la pile de corps ou modules 3, la présence d'un couvercle 32 du côté de chaque ouverture 31, lequel peut être doublé par une poche unique 34 à constitution PIV. Et une plaque 36 de protection mécanique peut fermer le tout, suivant l'axe 27, comme illustré. Un manchon, boîtier ou fourreau 38 de protection ouvert aux deux extrémités, par exemple en plastique dur, peut envelopper en outre les modules 3 et les pièces 32,34,36. Des moyens 40 de fixation, qui peuvent être des tirants, fixent mécaniquement ensemble les modules, suivant l'axe d'empilement 27.

Comme dans les modes de réalisation illustrés, chaque corps 3 sera favorablement monobloc. Il peut être en matière plastique, métallique (inox, aluminium) ou composite, en particulier. Une fabrication moulée sera préférée. Dans ce cas, il est prévu que la paroi périphérique 5 contienne un matériau polymère moulable (par exemple un polyamide ou un polysulfure de phénylène, chargé de fibres ou non) où pourront être intégrées les première et/ou seconde couches 15,23, comme prévu dans le mode de réalisation de la figure 2 où les deux couches 15,23 sont intégrées aux parois 5 et 29.

La référence à un corps en matériau moulable couvre tant les résines thermoplastiques chargées de fibres et injectées que les résines thermodurcissables imprégnant un tissu ou un mat, tel un tissé ou un non tissé.

Intégrées ou non dans la paroi des corps 3, au moins la seconde couche isolante 23, et de préférence les deux couches 15/23, seront favorablement enveloppées sous vide dans une ou plusieurs poches 19 dite donc ici « à constitution PIV » (étant précisé que le vide partiel pourrait être remplacé par une « atmosphère contrôlée » : le volume serait rempli par un gaz ayant une conductivité thermique inférieure à celle de l'air ambiant, 26mW/m.K).

A ce sujet, on peut prévoir des poches structurellement dissociées les unes des autres, comme figure 3 (où on doit les imaginer totalement fermées en périphérie), ou réalisées comme une bande 50 présentant une succession de telles poches réunies successivement deux à deux par des portions intermédiaires 21 flexibles définissant des zones d'articulation entre deux poches PIV 19 successives, comme figure 4. On notera, via cette figure, la possibilité de n'avoir ni première ni seconde couche 15/23 à l'endroit du fond 29 séparant deux modules adjacents. L'avantage d'un fond 29 à barrière 15/23 intégrée comme figure 2 est surtout en extrémité (dispense d'une poche 34 à « constitution PIV »), outre que cela standardise la fabrication en réduisant le nombre de pièces et rend chaque module totalement autonome thermiquement, tout en optimisant les transferts thermiques via la couche MCP 15.

Figures 5,6, on a schématisé deux modes, parmi plusieurs autres possibles, de réalisation d'une poche 19. Pour former une bande 50, on aura compris qu'il suffira de reproduire le modèle ensuite de part et d'autre pour continuer la structure, si souhaité.

Même si une seule couche (à base) MCP 15 est représentée comme figures 2,5,6, deux couches 15a, 15b (à températures de changement d'état différentes l'une de l'autre) encadrant la couche isolante 23 peuvent être prévues, comme figure 3.

Chaque poche 19 comprend :
- au moins un premier élément, ou première couche, 15 contenant donc le matériau MCP, à côté duquel est disposé la seconde couche à matériau isolant 23 (poreux s'il y a le vide), et
- au moins une enveloppe extérieure 37 fermée qui contient les premier et second éléments et est constituée d'au moins une feuille 49 déformable ou conformable, étanche au matériau MCP, avec :
   -- a) soit ladite feuille 49 qui est en outre scellable (thermiquement/chimiquement, en 49a,49b autour de la poche), comme montré figure 5 ;
   -- b) soit le second élément isolant thermique 23 contenu à l'intérieur d'une seconde enveloppe fermée 51 à feuille(s) flexible(s) 53 scellable(s) et étanche(s) au matériau poreux, comme montré figure 6.

La ou les feuilles ou film(s) 49 et 53 pourront typiquement être réalisés comme un film multicouche comportant des films polymère (PE et PET) et de l'aluminium sous forme par exemple laminée (feuille d'épaisseur de l'ordre d'une dizaine de micromètre) ou métallisée (dépôt sous vide d'un film de quelques dizaines de nanomètre).

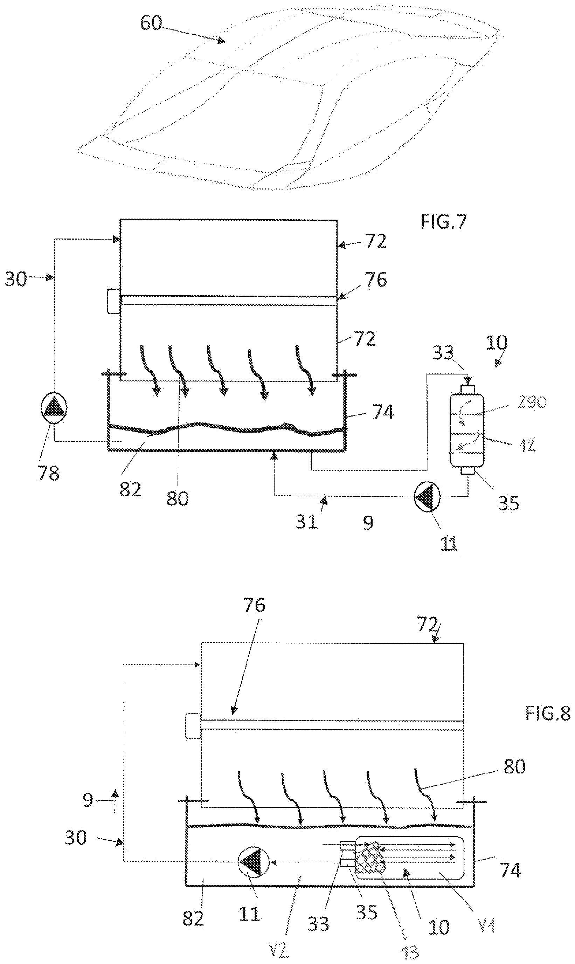

Deux exemples d'application vont être maintenant donnés, en liaison avec les figures 7-9 d'une part et 10-17 d'autre part. De façon générale, et même si d'autres domaines ne sont pas exclus, tels le bâtiment ou le froid industriel, les applications ci-après concernent le domaine des véhicules que déplacent des moteurs, dans les domaines automobiles (voitures, camions...), aéronautiques et maritimes (navires de surface, sous-marins, engins flottants divers...), en particulier.

Ainsi, voit-on figure 7 un véhicule 60, telle une voiture, comprenant le circuit 300 précité qui est ici, sur un moteur 72 du véhicule, un circuit de lubrification sur lequel sont disposés, en communication fluide, des organes fonctionnels 76 du moteur à lubrifier, un carter de lubrifiant 74 et le stockeur-échangeur de chaleur 10 qui peut donc comprendre un ou plusieurs modules 3, comme schématisé figures 3 et 1, respectivement. Ci-après, le fluide lubrifiant (9 ci-avant) est de l'huile, par exemple.

La figure 8 montre une alternative de réalisation.

Dans les deux cas, le circuit 300 définit un chemin de circulation d'un fluide sur lequel sont disposés, en communication fluide entre eux, un carter d'huile 74 et des organes fonctionnels du moteur à huiler, tel les paliers de bielles et de vilebrequin, mais aussi de l'arbre à cames et son dispositif d'entraînement, 76. Le carter 74, dont la cuve (a priori métallique) est vissée sous le bloc moteur 720, avec un joint d'étanchéité, contient l'huile nécessaire à la lubrification des éléments mobiles du bas moteur et du haut moteur. L'huile y est puisée par la crépine de la pompe à huile 78 qui la distribue sous pression, de préférence via un filtre à huile, aux différents organes (vilebrequin, bielles, arbre à cames...). L'huile peut redescendre ensuite par simple gravité ; flèches 80.

Dans la version de la figure 7, le stockeur-échangeur 10, qui peut être celui de la figure 1, assemblé, est raccordé via la connectique 33,35 à la branche 310 du circuit 300 qui communique avec le bain d'huile 82 du carter 74. La pompe 11 assure la circulation d'huile dans l'unité 10 et la branche 310. Ainsi, le bain d'huile 82 va pouvoir bénéficier d'une huile à température appropriée, telle une température évitant en particulier une température trop basse en hiver (voir ci-avant la référence à un démarrage à froid). Une autre pompe 78 prélève de l'huile dans le bain pour la distribuer vers les organes concernés du moteur, via la branche 301 du circuit 70. Cette solution peut être adaptée à une lubrification "par carter sec". L'huile ne sera alors plus contenue dans le carter, mais dans un réservoir indépendant où elle sera directement puisée, avant de passer dans l'unité 10, pour être ensuite acheminée vers les points à lubrifier, le retour se faisant directement dans le réservoir.

Dans le second montage, schématisé figure 8, le stockeur-échangeur 10 est placé via la connectique d'entrée/sortie de fluide 33,35 directement sur le circuit fermé d'huile 300 qui passe par les organes précités concernés du moteur 72 et le carter 74. La pompe 11 assure la circulation d'huile dans l'unité 1 et tout le circuit 300. L'unité 10 est disposée dans le carter d'huile 74. L'huile passe ainsi du bain 82 dans l'unité 10 d'où elle est prélevée pour circuler vers lesdits organes à lubrifier. Une telle intégration permet des gains de place, voire de poids et de rendements (potentiellement moins de perte de charge et protection thermique qui peut encore être accrue en isolant la paroi du carter 74).

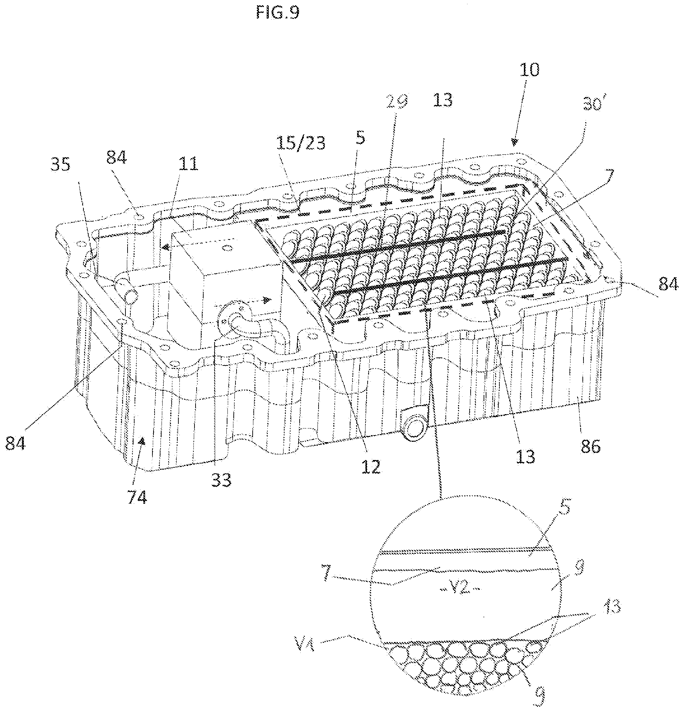

Sur la figure 9, on a schématisé un montage possible, dans le carter 74, du stockeur-échangeur 10, du moyen 11 de mise en circulation du liquide et de la connectique d'entrée/sortie de fluide 33,35 à brancher directement sur le circuit fermé d'huile (non représenté). Les orifices 84 du carter permettent son montage sous le bloc-moteur.

Le stockeur-échangeur est quasiment celui de la figure 3, avec un seul module compartimenté en sous-volumes et des chicanes 12 via des cloisons 29 qui définissent les sous-volumes, avec des communications 30' entre eux. Ainsi, le fluide est obligé à serpenter dans le volume 7 où sont disposés les éléments 13 de stockage et de restitution d'énergie thermique, à matériau MCP. En circulant autour et/ou dans les éléments (13) de stockage et de restitution d'énergie thermique qui sont répartis dans les sous-volumes (7,7b...), le lubrifiant va échanger thermiquement avec eux.

Latéralement tout autour, mais aussi sous lui et au-dessus via par exemple des couvercles de carter tels celui 32 à poche unique ou multiple et à constitution PIV 34 (comme figure 1), le volume 7 est pourvu du complexe de gestion thermique à couches MCP 15/ isolant thermique 23 et à poches 19. En pratique les parois 5 de constitution du stockeur-échangeur 10 pourront, pour cela, être pourvues, par exemple intégré dans leur épaisseur ou en doublure, d'un dit complexe de gestion thermique à couches MCP 15/ isolant thermique 23 et à poches 19 sous vide, comme schématisé figure 9.

A priori, le volume interne du carter 74 sera figé par le constructeur du véhicule.

Or, réaliser un réservoir de lubrifiant de véhicule pouvant permettre de réchauffer du lubrifiant alors que la température extérieure est très froide, par exemple -5 à -10°C, et que le véhicule est à l'arrêt à cette température depuis par exemple 6 à 8 heures était un défi.

Une solution a été ici apportée en prévoyant à la fois que, favorablement, et comme schématisé figures 8 et 9 :
- dans le carter de lubrifiant 74, circulation de lubrifiant à l'arrêt, les éléments 13 de stockage et de restitution de ladite énergie thermique (voir arrachés figure 8,9) baignent dans un premier volume de lubrifiant (V1) à l'extérieur (typiquement au-dessus) duquel s'étend un second volume de lubrifiant (V2) supérieur au premier volume,
- et que des chicanes 12 soient présentes dans le volume 7 rempli desdits éléments 13.

En particulier lors d'un démarrage moteur, le(s) MCP(s) desdits éléments 13 seront alors encore chauds : ils auront conservés de la chaleur latente issue de la fin du fonctionnement précédent du bloc moteur pourvu dudit carter de lubrifiant. Le premier volume de lubrifiant (V1) sera donc alors plus chaud que le second (V2), par échange thermique avec les éléments 13 baignant dedans.

Mais, le second volume extérieur de lubrifiant (V2) étant de construction supérieur au premier volume (V1), il a été choisi de multiplier et d'allonger les zones d'échanges fluides/MCP, de là les chicanes 12 via un cloisonnage interne que schématise les flèches qui serpentent figure 8 et via les cloisons 29 figure 9.

De la sorte, au moment du démarrage d'un nouveau cycle (après l'arrêt précité par temps froid), par mélange progressif via la circulation dans le circuit, le lubrifiant total en circulation (V1+V2) pourra être rapidement globalement chaud, avec des avantages en termes de rendement du moteur à lubrifier et de limitation des polluants.

Dans l'arraché agrandi de la figure 9, il est supposé que les volumes V1+V2 sont contenus uniquement dans le volume 7, le volume V1 en partie inférieure contenant les éléments MCP 13 et que surmonte le volume V2 est inférieur à ce second volume de lubrifiant (V2), extérieur à la zone contenant lesdits éléments MCP 13. Dans cette hypothèse, le niveau de remplissage de l'unité 10 en éléments MCP 13 est faux en haut de la figure 9.

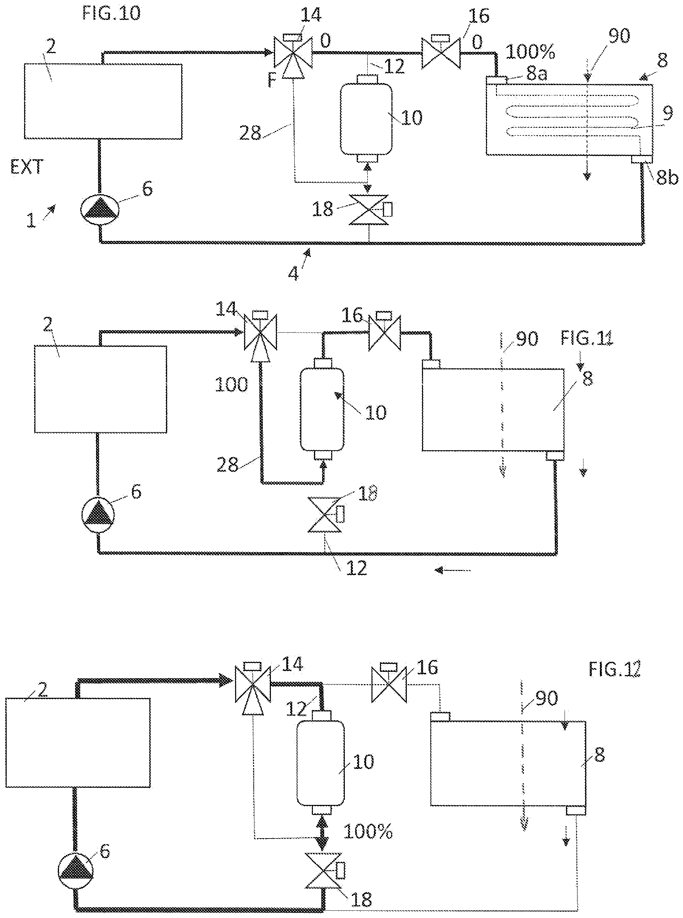

Figures 10 à 17, le circuit 300 est un circuit de refroidissement par un liquide caloporteur (9 ci-avant), tel que de l'eau, d'un moteur 2 de véhicule.

Le circuit comprend un chemin 4 de circulation du liquide et, disposés sur le chemin :
- en série, un moyen 6 de mise en circulation du liquide sur le chemin, le moteur 2 dont des organes sont à placer en échange thermique avec le liquide 9 qui circule et un radiateur 8 présentant une entrée 8a et une sortie 8b de liquide afin de placer celui-ci en échange thermique avec un autre fluide 90,
- montée sur une première branche 12, entre l'entrée et la sortie du radiateur, le stockeur-échangeur de chaleur (ou unité) 10.

Le terme radiateur inclut :
- tant un radiateur d'automobile ou d'avion en général du type échangeur fluide (air)/liquide (eau glycolée),
- que les échangeurs liquide/liquide comme sur les structures maritimes, tels les bateaux, où le radiateur sera typiquement un échangeur liquide (eau de mer)/liquide (eau douce).

En outre, deux montages du circuit sont possibles : figures 10-12 ou figures 13-17. Sur ces figures, les traits renforcés montrent là où circule le fluide, les traits fins là où il ne circule pas.

Avec le montage des figures 10-12, le mode opératoire est le suivant, les vannes ci-après étant typiquement des électrovannes pilotées automatiquement (idem pour l'autre montage) :
- en fonctionnement nominal (figure 10) et en sortie du moteur 2, le liquide passe dans la première vanne trois voies 14 et ensuite exclusivement dans le radiateur 9, sans passer dans l'unité 10, la deuxième vanne (deux voies) 16 étant ouverte et la troisième vanne (deux voies) 18 fermée,
- en situation de charge de calories de l'unité 10 (figure 11) et en sortie du moteur 2, le liquide passe dans la première vanne 14 qui le dirige exclusivement vers l'unité 10 (via la deuxième branche 28 du circuit) après quoi le liquide passe dans le radiateur 8 puis retourne au moteur, la deuxième vanne 16 étant ouverte et la troisième vanne 18 fermée,
- et, en situation de décharge de calories de l'unité 10 (figure 12), le liquide passe dans la première vanne 14 et ensuite exclusivement dans l'unité 10 puis retourne au moteur 2, la deuxième vanne 13 étant fermée et la troisième vanne 18 ouverte.

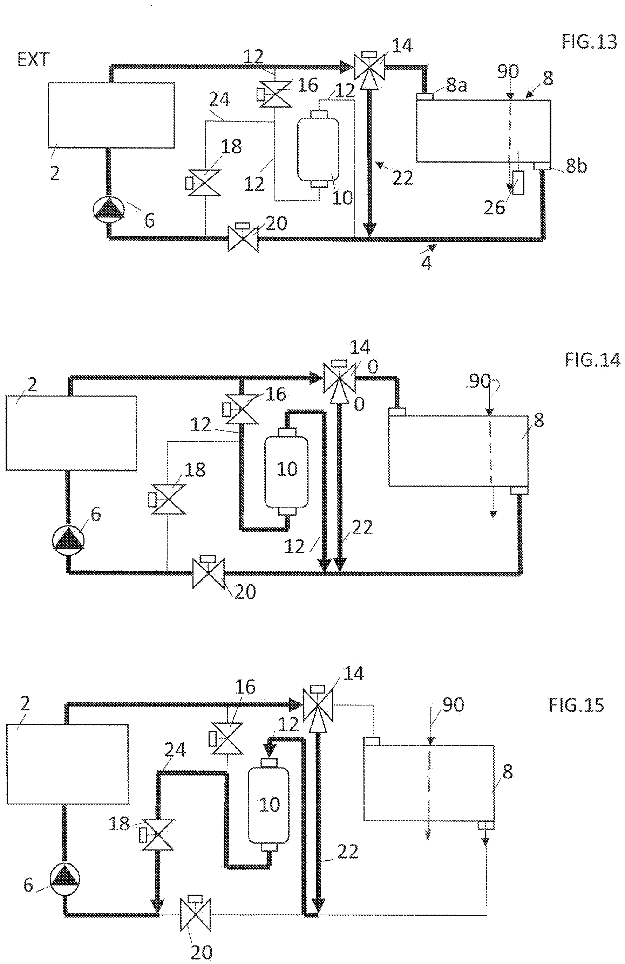

Avec le montage des figures 13-17, le mode opératoire est le suivant :
- en fonctionnement nominal (figure 13) et en sortie du moteur 2, le liquide passe dans la première vanne trois voies 14 et ensuite dans le radiateur 8, sans passer dans l'unité 10, la quatrième vanne (deux voies) 20 étant ouverte et les deuxième et troisième vannes (deux voies) 16,18 fermées,
- en situation de charge de calories de l'unité 10 (figure 14) et en sortie du moteur, le liquide passe au moins en partie dans la deuxième vanne 16 qui (via la première branche 12) le dirige vers l'unité 10, tandis qu'un passage vers le radiateur 8, à travers la première vanne 14, et dans la deuxième branche 22 est ajusté en fonction d'au moins un paramètre physique dans l'unité et dans le radiateur, après quoi le liquide retourne vers le moteur 2, la quatrième vanne 20 étant ouverte et la troisième vanne 18 fermée,

- en situation de décharge de calories de l'unité 10 (figure 15), le liquide passe dans la première vanne 14 qui le dirige exclusivement dans l'unité 10 par la deuxième branche 22 puis la première branche 12, sans passage dans le radiateur, la quatrième vanne 20 étant fermée, après quoi le liquide retourne vers le moteur 2, la deuxième vanne 16 étant fermée (comme l'est encore la quatrième vanne 20) et la troisième vanne 18 ouverte, de sorte que le liquide peut passer dans la troisième branche 24 porteuse de la troisième vanne 18 et branchée :
   -- d'un côté, sur la branche 12, entre la deuxième vanne 16 et l'unité 10,
   -- de l'autre, sur le chemin 4, entre l'entrée dans le moteur et la quatrième vanne 20.

De préférence, le paramètre physique à choisir dans l'unité 10 et le radiateur pour piloter la charge de calories plus ou moins rapide ou complète de l'unité 10 sera une température dans le radiateur 8, de préférence une température de sortie.

Et, favorablement, en fonctionnement nominal, la première vanne 14 répartira, entre le radiateur 8 et ladite deuxième branche 22, la circulation du liquide sortant du moteur en fonction d'une donnée de température liée au radiateur. Une sonde de température 26 est prévu pour cela (figure 13), reliée au calculateur qui pilote les vannes.

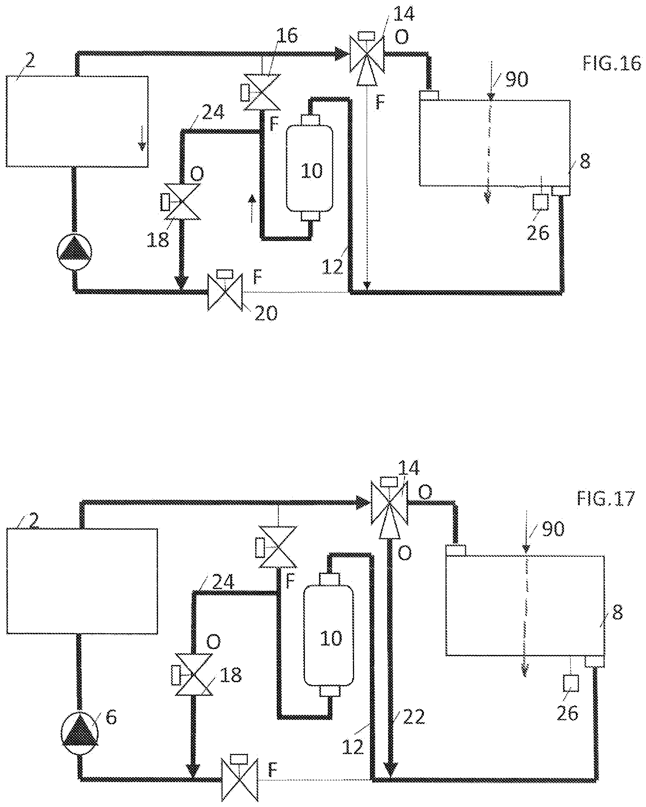

En outre, en fonctionnement nominal, si un problème de puissance survient sur le radiateur 8 due à une surcharge thermique détectée par une sonde de température (telle la sonde 26), la quatrième vanne 20 se fermera et la troisième vanne 18 s'ouvrira, pour assurer une circulation du liquide dans l'unité 10 (via la première branche 12) après passage dans le radiateur (figure 16). La deuxième vanne 16 sera fermée, le retour vers le moteur s'opérant via la troisième branche 24 (où la troisième vanne 18 est toujours ouverte), la quatrième vanne 20 étant toujours fermée.

Puis (voir figure 17), une fois que la sonde de température détectera une fin de la surcharge thermique dans le radiateur 8, la première vanne 14 répartira de nouveau la circulation du liquide sortant du moteur 2 entre le radiateur 8 et ladite deuxième branche 22, alors qu'elle avait dirigé le liquide exclusivement vers le radiateur, sans passage donc dans la deuxième branche, après détection de la surcharge thermique par la sonde de température.

Concernant la performance thermique de l'unité 10 dans l'un des circuits, on notera encore que le/chaque module de l'unité pourra être isolé thermiquement de l'extérieur (EXT) par le complexe barrière 15/23 comprenant favorablement un PIV d'aérogel 23 de conductivité thermique égale à 6-8mW/mK à 25°C, de 15-20mm d'épaisseur entourant une couche 15 à base d'élastomère chargé à 80-90% en masse de MCP micro-encapsulés d'enthalpie égale à 200-240 kJ/kg de 2.5-5.5mm d'épaisseur. La quantité d'énergie stockée initiale de 1,5-2 MJ pour de l'huile pourra être maintenue avec un SOC (état de charge) à 65-75% au-delà de 15 heures, permettant ainsi la restitution d'un niveau énergétique très performant. Cette énergie pourra être restituée en moins de 2/3 minutes pour maximiser la réduction des émissions de CO2 dans le cas d'un démarrage à froid du moteur, par exemple.
Quant à la figure 18, elle schématise une fonctionnalisation supérieure du stockeur-échangeur 10. On y retrouve plusieurs modules superposés 3 renfermant chacun un volume intérieur 7 où peut circuler le fluide 9, entre l'entrée 33 et la sortie 35. Chaque module présente un fond 290 et peut être ouvert à l'opposé. Les fonds 290 créent une succession de sous-volumes où sont disposés des séries d'éléments 13 (non représentés ici) au contact et le long desquels circule le liquide concerné. Des passages 30 font communiquer les volumes des modules, parallèlement à l'axe 27 de superposition (ici vertical). Deux passages successifs sont décalés latéralement (par rapport à l'axe 27). Ceci crée les chicanes. Une colonne fonctionnalisée 88 s'étend suivant l'axe 27, à l'extérieur des modules superposés. Elle comprend les connectiques (tubes) d'entrée 33 et sortie 35, leurs raccordements aux premiers et derniers modules de la pile et deux vannes 92,94. La vanne trois voies 92 dirige le fluide entrant soit vers le premier module 3, soit directement vers le tube de sortie 35 qui lui est parallèle dans la colonne 88. La seconde vanne 94, à deux voies, interdit ou autorise la communication entre le volume du dernier module et le tube de sortie 35, en aval de la vanne 92. Il n'y a pas de couche MCP, ni d'isolant thermique entre les modules à l'endroit des fonds 290 où sont ménagés des passages 30.

Tous les modules superposés 3 (voire comme ici la colonne fonctionnalisée 88 disposée face à eux), sans interférer donc avec leurs volumes internes, sont entourés par la paroi périphérique 500 d'un boîtier protecteur 96 contenant ou doublée intérieurement, sur toutes les faces du boîtier et quasi continument, par le complexe de gestion thermique 15/23 à matériau MCP et poches PIV sous atmosphère contrôlée, 19 ou 50.

## Revendications

1. Dispositif thermique pour un fluide frigorigène ou caloporteur, le dispositif comprenant :
- un circuit (300) de circulation du fluide où le fluide peut circuler dans le temps à différentes températures,
- un stockeur-échangeur de chaleur (10) disposé sur ledit circuit et renfermant un volume (7) intérieur :
-- où peut circuler le fluide, entre une entrée (33) et une sortie (35),
-- et où est disposé du matériau à changement de phase (MCP), en contact avec ledit fluide qui circule, pour un échange thermique entre eux,
**caractérisé en ce que** :
- le matériau à changement de phase (MCP) est disposé, au sein dudit volume (7), dans une pluralité d'éléments (13) de stockage et de restitution d'une énergie thermique,
- de construction modulaire, le stockeur-échangeur de chaleur (10) comprend plusieurs modules (3) adjacents, distincts structurellement et dont certains au moins comprennent individuellement un fond (290) séparant deux modules adjacents, chaque fond :
-- scindant le volume en une succession de sous-volumes (7,7b...) où sont répartis les éléments (13) de stockage et de restitution d'énergie thermique autour et/ou dans lesquels circule le fluide, en échanges thermiques avec eux,
-- et présentant au moins un passage (30) de communication entre les sous-volumes, et,
- pour créer dans le stockeur-échangeur de chaleur (10) des chicanes (12) sur le chemin du fluide :
-- les passages (30) de communication entre les sous-volumes sont décalés d'un passage au suivant, et/ou
-- à l'intérieur du module considéré, et pour y créer d'autres dits sous-volumes (7a,...7c), des cloisons (29) se dressent qui maintiennent des communications (30') entre lesdits autres sous-volumes, pour la circulation du fluide.

2. Dispositif thermique selon la revendication 1, où les éléments (13) de stockage et de restitution d'une énergie thermique sont des structures individualisées ayant des surfaces extérieures formées pour réserver entre deux éléments (13) un espace (130) où le fluide peut circuler.

3. Dispositif thermique selon l'une des revendications précédentes, où les éléments (13) de stockage et de restitution d'une énergie thermique comprennent des billes.

4. Dispositif thermique selon l'une des revendications précédentes :
- où le stockeur-échangeur de chaleur (10) présente au moins une paroi périphérique (5,500) interposée entre le volume intérieur de l'extérieur, et
- le dispositif comprend en outre au moins une première couche (15) contenant un matériau à changement de phase (MCP) et une seconde couche (23) contenant un matériau isolant thermique qui entourent ledit volume intérieur.

5. Dispositif thermique selon la revendication 4, où ladite au moins une paroi périphérique (5) contient un matériau polymère moulable et les première et seconde couches (15,23) sont intégrées avec ledit matériau polymère.

6. Dispositif thermique selon l'une des revendications 4 ou 5, où ladite au moins une dite paroi périphérique (500) appartient à un boîtier protecteur (38, 96) extérieur entourant tous les modules (3) du stockeur-échangeur et qui intègre ou est doublé par lesdites première(s) et/ou seconde(s) couche(s) (15,23).

7. Dispositif thermique selon l'une des revendications 4 à 6, où chacun des modules (3) du stockeur-échangeur de chaleur comprend une dite paroi périphérique (5) qui intègre ou est doublée par lesdites première(s) et/ou seconde(s) couche(s) (15,23).

8. Dispositif thermique selon l'une des revendications précédentes, où :
- ledit fluide (9) frigorigène ou caloporteur est un liquide caloporteur d'un moteur (2) sur un véhicule, et
- le circuit (300) est un circuit de refroidissement par ledit liquide caloporteur du moteur (2) du véhicule, le circuit comprenant un chemin de circulation du liquide et, disposés sur le chemin :
- en série, un moyen (6) de mise en circulation du liquide sur le chemin, un moteur dont des organes sont à placer en échange thermique avec le liquide (9) caloporteur et un radiateur (8) présentant une entrée et une sortie pour ledit liquide afin de le placer en échange thermique avec un autre fluide (90),
- monté sur une première branche (12) entre l'entrée et la sortie du radiateur, le stockeur-échangeur de chaleur (10).

9. Véhicule à moteur (2), le véhicule comprenant le dispositif thermique selon l'une des revendications précédentes et étant tel que :
- le fluide (9) frigorigène ou caloporteur est un fluide lubrifiant (9),
- le circuit (300) de circulation dudit fluide est un circuit de lubrification sur lequel sont disposés, en communication fluide, des organes fonctionnels (76) du moteur à lubrifier, un carter (74) de lubrifiant et le stockeur-échangeur de chaleur (10), et
- le stockeur-échangeur de chaleur (10) inclut lesdites cloisons (29) qui scindent le volume (7) intérieur en une succession de dits sous-volumes (7,7b...) communiquant (30') entre eux, pour la circulation en chicanes (12) du lubrifiant, autour et/ou dans les éléments (13) de stockage et de restitution d'énergie thermique qui sont répartis dans les sous-volumes (7,7b...), pour échanger thermiquement avec le lubrifiant.

10. Véhicule selon la revendication 9 dans lequel, dans le carter (74) de lubrifiant, circulation de lubrifiant à l'arrêt, lesdits éléments (13) de stockage et de restitution de ladite énergie thermique baignent dans un premier volume de lubrifiant (V1) à l'extérieur duquel s'étend un second volume de lubrifiant (V2) supérieur au premier.

11. Véhicule selon la revendication 9 ou 10, où au moins la seconde couche contenant le matériau isolant thermique (23) est contenue dans une enveloppe (37,51) étanche audit matériau et à l'air pour que, un vide d'air étant établi dans ladite enveloppe, un panneau PIV soit constitué.

12. Véhicule selon l'une des revendications 9 à 11, où :
- les organes fonctionnels du moteur sont situés dans un bloc moteur (720),
- le carter (74) de lubrifiant, est vissé au bloc moteur, sous lui, et contient un bain de lubrifiant (82), et
- le stockeur-échangeur de chaleur (10) est disposé dans le carter de lubrifiant, pour envoyer vers le bloc moteur du lubrifiant après qu'il ait circulé dans ledit stockeur-échangeur de chaleur (10).

## Patentansprüche

1. Thermische Vorrichtung für ein Kältemittel- oder Wärmeträgerfluid, wobei die Vorrichtung enthält:
- einen Fluidströmungskreislauf (300), wo das Fluid zeitlich bei unterschiedlichen Temperaturen strömen kann,
- eine Wärmetauscher-Speichereinheit (10), die an dem Kreislauf angeordnet ist und ein Innenvolumen (7) einschließt:
-- wobei das Fluid zwischen einem Einlass (33) und einem Auslass (35) strömen kann,
-- und wobei ein Phasenwechselmaterial (PCM) in Kontakt mit dem strömenden Fluid für einen zwischen diesen erfolgenden Wärmeaustausch angeordnet ist,
**dadurch gekennzeichnet, dass**
- das Phasenwechselmaterial (PCM) innerhalb des Volumens (7) in einer Vielzahl von Elementen (13) zur Speicherung und Rückgewinnung von Wärmeenergie angeordnet ist,
- die modular aufgebaute Wärmetauscher-Speichereinheit (10) mehrere aneinandergrenzende Module (3) enthält, die sich strukturell voneinander unterscheiden und von denen zumindest einige einzeln einen Boden (290) enthalten, der zwei aneinandergrenzende Module trennt, wobei jeder Boden:
-- das Volumen in eine Folge von Teilvolumina (7, 7b ...) unterteilt, wo die Elemente (13) zur Speicherung und Rückgewinnung der Wärmeenergie verteilt sind, um die herum und/oder in denen das Fluid im Wärmeaustausch mit diesen strömt,
-- und zumindest einen Verbindungsdurchgang (30) zwischen den Teilvolumina aufweist, und
- zum Erzeugen von Umlenkflächen (12) in der Wärmetauscher-Speichereinheit (10) im Strömungsweg des Fluids:
-- die Verbindungsdurchgänge (30) zwischen den Teilvolumina von einem Durchgang zum nächsten versetzt sind, und/oder
-- innerhalb des betreffenden Moduls und zur Schaffung weiterer so genannter Teilvolumina (7a, ... 7c) sich Trennwände (29) erheben, die die Verbindungen (30') zwischen den weiteren Teilvolumina für die Strömung des Fluids aufrechterhalten.

2. Thermische Vorrichtung nach Anspruch 1,
wobei die Elemente (13) zur Speicherung und Rückgewinnung von Wärmeenergie vereinzelte Strukturen mit Außenflächen sind, die so geformt sind, dass zwischen zwei Elementen (13) ein Raum (130) besteht, wo das Fluid strömen kann.

3. Thermische Vorrichtung nach einem der vorangehenden Ansprüche, wobei die Elemente (13) zur Speicherung und Rückgewinnung von Wärmeenergie Kugeln enthalten.

4. Thermische Vorrichtung nach einem der vorangehenden Ansprüche,
- wobei die Wärmetauscher-Speichereinheit (10) zumindest eine Umfangswand (5, 500) aufweist, die zwischen dem Innenvolumen und dem Außenbereich eingefügt ist, und
- die Vorrichtung ferner zumindest eine erste Schicht (15) mit einem Phasenwechselmaterial (PCM) und eine zweite Schicht (23) mit einem Wärmedämmmaterial enthält, welche das Innenvolumen umgeben.

5. Thermische Vorrichtung nach Anspruch 4,
wobei die zumindest eine Umfangswand (5) ein formbares Polymermaterial enthält und die erste und die zweite Schicht (15, 23) mit dem Polymermaterial integriert sind.

6. Thermische Vorrichtung nach einem der Ansprüche 4 oder 5,
wobei die zumindest eine Umfangswand (500) zu einem äußeren Schutzgehäuse (38, 96) gehört, das sämtliche Module (3) der Wärmetauscher-Speichereinheit umgibt und das die erste und/oder die zweite Schicht (15, 23) integriert oder damit ausgekleidet ist.

7. Thermische Vorrichtung nach einem der Ansprüche 4 bis 6,
wobei jedes der Module (3) der Wärmetauscher-Speichereinheit eine Umfangswand (5) enthält, welche die erste und/oder die zweite Schicht (15, 23) integriert oder damit ausgekleidet ist.

8. Thermische Vorrichtung nach einem der vorangehenden Ansprüche, wobei
- das Kältemittel- oder Wärmeträgerfluid (9) eine Wärmeträgerflüssigkeit für einen Motor (2) an einem Fahrzeug ist, und
- der Kreislauf (300) ein Kühlkreislauf zum Kühlen durch die Wärmeträgerflüssigkeit des Fahrzeugmotors (2) ist, wobei der Kreislauf einen Strömungspfad für die Flüssigkeit enthält und an dem Pfad angeordnet aufweist:
- in Reihe eine Einrichtung (6) zum Umwälzen der Flüssigkeit auf dem Pfad, einen Motor, dessen Teile in Wärmeaustausch mit der Wärmeträgerflüssigkeit (9) zu bringen sind, und einen Kühler (8) mit einem Einlass und einem Auslass für die genannte Flüssigkeit, um sie in Wärmeaustausch mit einer weiteren Flüssigkeit (90) zu bringen,
- die an einem ersten Abzweig (12) zwischen Einlass und Auslass des Kühlers montierte Wärmetauscher-Speichereinheit (10).

9. Fahrzeug mit Motor (2), wobei das Fahrzeug die thermische Vorrichtung nach einem der vorangehenden Ansprüche enthält und derart ausgeführt ist, dass
- das Kältemittel- oder Wärmeträgerfluid (9) ein Schmiermittelfluid (9) ist,
- der Fluidströmungskreislauf (300) ein Schmierkreislauf ist, an welchem in Strömungsverbindung Funktionsteile (76) des zu schmierenden Motors, ein Schmiermittelgehäuse (74) und die Wärmetauscher-Speichereinheit (10) angeordnet sind, und
- die Wärmetauscher-Speichereinheit (10) die Trennwände (29) enthält, welche das Innenvolumen (7) in eine Folge von Teilvolumina (7, 7b ...) unterteilt, die miteinander in Verbindung (30') stehen zur Umwälzung des Schmiermittels durch Umlenkflächen (12) um und/oder in die Elemente (13) zur Speicherung und Rückgewinnung von Wärmeenergie, die in den Teilvolumina (7, 7b ...) verteilt sind, um im Wärmeaustausch mit dem Schmiermittel zu stehen.

10. Fahrzeug nach Anspruch 9,
wobei in dem Schmiermittelgehäuse (74) bei angehaltener Schmiermittelströmung die Elemente (13) zur Speicherung und Rückgewinnung von Wärmeenergie in einem ersten Schmiermittelvolumen (V1) baden, außerhalb von welchem ein zweites Schmiermittelvolumen (V2) verläuft, das größer als das erste ist.

11. Fahrzeug nach Anspruch 9 oder 10,
wobei zumindest die das Wärmedämmmaterial (23) enthaltende zweite Schicht in einem Mantel (37, 51) enthalten ist, der gegenüber dem Material und gegenüber Luft dicht ist, um bei Entstehung eines Luftvakuums in dem Mantel ein Vakuum-Isolations-Paneel PIV zu bilden.

12. Fahrzeug nach einem der Ansprüche 9 bis 11,
wobei
- die Funktionsteile des Motors sich in einem Motorblock (720) befinden,
- das Schmiermittelgehäuse (74) mit dem Motorblock unter diesem verschraubt ist und ein Schmiermittelbad (82) enthält, und
- die Wärmetauscher-Speichereinheit (10) in dem Schmiermittelgehäuse angeordnet ist, um Schmiermittel zum Motorblock zu leiten, nachdem es in der Wärmetauscher-Speichereinheit (10) umgewälzt worden ist.

## Claims

1. Thermal device for a refrigerant fluid or a heat transfer fluid, the device comprising:
- a circuit (300) for circulating said fluid, in which the fluid circulates over time at different temperatures,
- a thermal store and heat exchanger (10) arranged on said circuit and enclosing an interior volume (7) :
-- in which the fluid circulates, between an inlet (33) and an outlet (35), and
-- in which is arranged phase change material (PCM), in contact with the fluid which circulates, to thermally exchange between each other,
**characterised in that**:
- the phase change material (PCM) is arranged, within said interior volume (7), in a plurality of store and release thermal energy elements (13),
- having a modular construction, the thermal store and heat exchanger (10) comprises several adjacent modules (3), structurally separate and of which at least some individually comprise a base (290) separating two adjacent modules, each base:
-- splitting the volume (7) into a succession of sub-volumes (7, 7b, etc.), in which are arranged said store and release thermal energy elements (13), around which and/or wherein the fluid circulates, in heat exchanges with each other,
-- and having at least one passage (30) for allowing the sub-volumes to communicate therebetween,
- and, for creating baffles (12) in the thermal store and heat exchanger (10) on the fluid path:
-- said passages (30) for allowing the sub-volumes to communicate therebetween are offset from one of said passage to the following one, and/or
-- inside the corresponding module, and for creating therein other sub-volumes (7a, 7c), partitions (29) stand which keep communications (30') between said other sub-volumes, for the circulation of the fluid.

2. Thermal device according to claim 1, in which the store and release thermal energy elements (13) are individualised structures that have exterior surfaces formed to keep a space (130) between two of said elements (13), in which space the fluid can circulate.

3. Thermal device according to one of the preceding claims, in which the store and release thermal energy elements (13) comprise beads.

4. Thermal device according to one of the preceding claims:
- in which the store and heat exchanger (10) has at least one peripheral wall (5, 500) interleaved between the interior volume of the outside, and
- the device further comprises at least one first layer (15) containing a phase change material (PCM) and at least one second layer (23) containing a thermally-insulating material which surrounds said interior volume.

5. Thermal device according to claim 4, in which said at least one peripheral wall (5) contains a mouldable polymer material and the first and second layers (15, 23) are integrated with said polymer material.

6. Thermal device according to claim 4 or 5, in which said at least one peripheral wall (500) belongs to an exterior protective casing (38, 96) surrounding all the modules (3) of the store and heat exchanger and which integrates or is lined by said first and/or second layers (15, 23).

7. Thermal device according to one of the claims 4 to 6, in which each one of the modules (3) of the store and heat exchanger comprises said peripheral wall (5) which integrates or is lined by said first and/or second layer(s) (15, 23).

8. Thermal device according to one of the preceding claims, in which:
- said refrigerant fluid or heat transfer fluid (9) is a heat transfer liquid of an engine (2) in a vehicle,
- the circuit (300) is a circuit for cooling by said liquid of the engine (2) in the vehicle, the circuit comprising a path for circulating the liquid and, arranged on the path:
- in series, a means (6) for circulating the liquid on the path, an engine of which components are to be placed in a heat exchange with the heat transfer liquid (9) and a radiator (8) having an inlet and an outlet for said liquid, in order to place it in heat exchange with another fluid (90),
- assembled on a first branch (12), between the inlet and the outlet of the radiator, the thermal store and heat exchanger (10).

9. A vehicle (2) comprising an engine and the thermal device according to one of the preceding claims, the vehicle being such that :
- said refrigerant or heat transfer fluid (9) is a lubricant (9),
- the circulation circuit (300), in which said fluid circulates is a lubricant circuit on which are arranged, in fluid communication therebetween, functional components (76) of the engine to be lubricated, a lubricant crankcase (74) and the store and heat exchanger (10), and
- the store and heat exchanger (10) includes partitions (29) which split the interior volume (7) into a succession of sub-volumes (7, 7b, etc.) with communications (30') therebetween, for the circulation in baffles (12) of the lubricant, around and/or in the store and release thermal energy elements (13) which are distributed in the sub-volumes (7, 7b, etc.), to thermally exchange with the lubricant.

10. Vehicle according to claim 9, in which, in the lubricant crankcase (74), with lubricant circulation stopped, said store and release thermal energy elements (13) are immersed in a first lubricant volume (V1) outside which a second lubricant volume (V2), of a more important volume than the first one, lays.

11. Vehicle according to claim 9 or 10, in which at least the second layer containing the thermally-insulating material (23) is contained in an envelope (37, 51) sealed against said material and against air, such that with an air gap being created in said envelope, a VIP panel is constituted.

12. Vehicle according to one of the claims 9 to 11, in which:
- the functional components of the engine are located in an engine block (720),
- the lubricant crankcase (74) is screwed to the engine block, under it, and contains a lubricant bath (82), and
- the thermal store and heat exchanger (10) is arranged in the lubricant crankcase, to send the lubricant towards the engine block, after which it has circulated in said thermal store and heat exchanger (10).
